Europäisches Patentamt

European Patent Office

Office européen des brevets

(19)

(11) Publication number: **0 021 810**

**A1**

(12) **EUROPEAN PATENT APPLICATION**

(21) Application number: **80302092.4**

(22) Date of filing: **20.06.80**

(51) Int. Cl.³: **F 03 D 7/02**

(30) Priority: **21.06.79 GB 7921580**

(43) Date of publication of application:
**07.01.81 Bulletin 81/1**

(84) Designated Contracting States:
**CH DE FR GB LI**

(71) Applicant: **WESCO WINDMILLS LIMITED**
**Iroko House Bolney Avenue**
**Peacehaven East Sussex, BN9 8HQ(GB)**

(72) Inventor: **Greenwood, John Unwins**
**3 Qeen's Parade North Road**
**Lancing Sussex(GB)**

(74) Representative: **Daley, Michael John et al,**
**F.J. CLEVELAND & COMPANY 40/43 Chancery Lane**
**London, WC2A 1JQ(GB)**

(54) Feathering windmill.

(57) This invention relates to a windmill, a windmotor, wind-machine or windturbine that has rotatable blades capable of being rotated by the natural wind or an artificial wind. The invention further relates to a windmill of the kind in which a housing-support journals a rotor comprising a hub having a plurality of radially placed blades of aerofoil section that rotate in a plane substantially normal to the direction of the wind. The windmill is characterised in that each blade ($P_1$) is variable in pitch or effective pitch through substantially a right angle to a feathered position that brakes said rotor, said variability being effected by weights ($14_1$, $14_2$) of a centrifugal governor (14), said weights being rotatable in a plane ($W_1 W_2$) substantially parallel to the said plane ($R_1 R_2$) normal to the wind, said governor acting directly on a pitch change shaft (11) directly mechanically connected to each blade or a part of said blade said pitch change shaft (11) being co-axial with said hub. The invention also includes balance weights (Figure 6B $m_a . m_b$) calculated according to a specific equation (7) to remove parasitic stress in the blade.

FIG.1A

./...

FIG.1B

FIG.1C

FIG.6B

- 2 -

## DESCRIPTION

This invention relates to a windmill by which term is meant a windmotor, windmachine or windturbine that has rotatable blades capable of being rotated by the natural wind or an artificial wind as for example generated by the movement of a body in flight. The invention further relates to a windmill of the kind (hereinafter referred to as the kind set forth) in which a housing-support journals a rotor comprising a hub having a plurality of radially placed blades of aerofoil section that rotate in a plane substantially normal to the direction of the wind.

According to the present invention there is provided a windmill of the kind set forth characterised in that each blade is variable in pitch or effective pitch through substantially a right angle to a feathered position that brakes said rotor, said variability being effected by weights of a centrifugal governor, said weights being rotatable in a plane substantially parallel to the said plane normal to the wind, said governor acting directly on

- 3 -

a pitch change shaft directly mechanically connected to each blade or a part of said blade said pitch change shaft being co-axial with said hub.

In a preferred construction an override lever is provided that is able to override the governor pitch setting and to feather the blades to bring the rotor to rest into what is termed in the art a parked condition, the rotor remaining generally fully into the wind.

The invention will be more fully understood from the following description given by way of example with reference to the Figures of the accompanying drawings in which:-

Figures 1A, 1B, 1C are schematics showing normal running conditions, a governing condition and a parked condition for a windmill.

Figures 2 and 3 are respectively a part side sectional elevation and an end elevation in third angle orthographic projection of one mechanism inside the housing support, for effecting the pitch control and override shown in Figures 1A, 1B, 1C.

- 4 -

Figure 4 is a side elevation partly in
section of the pitch change mechanism of Figures 2
and 3 at the blade root, and

Figure 5 is a general view of a windmill
of Figures 1 to 4 on a tower superstructure with a
winch.

Figures 6A and 6B are schematics of a
mathematical analysis of a blade.

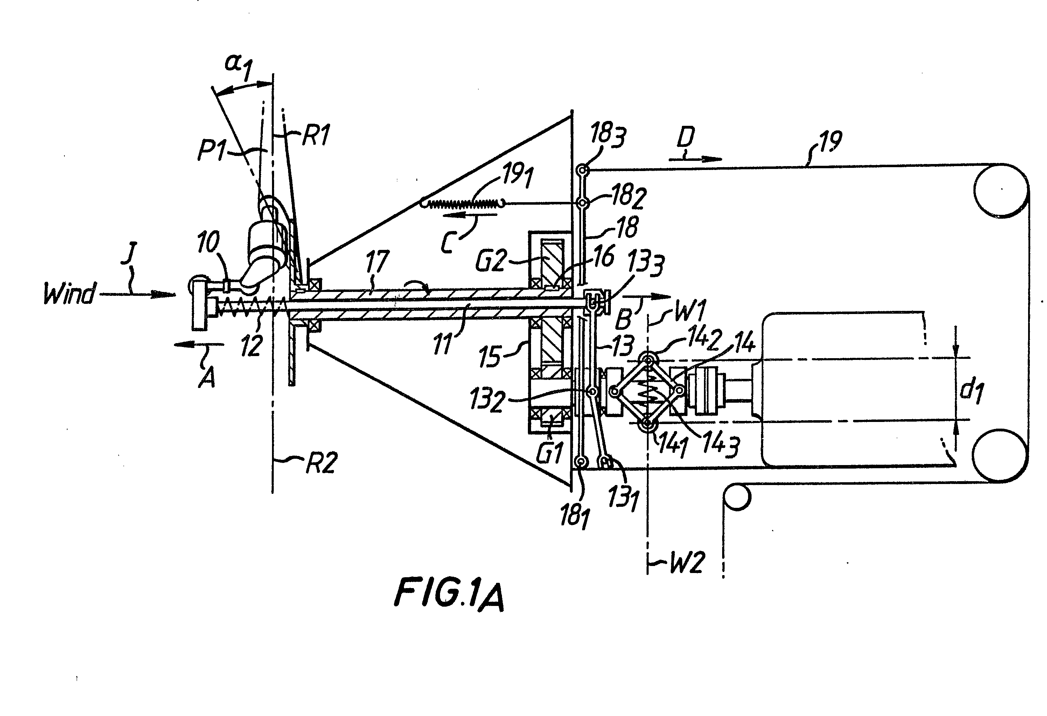

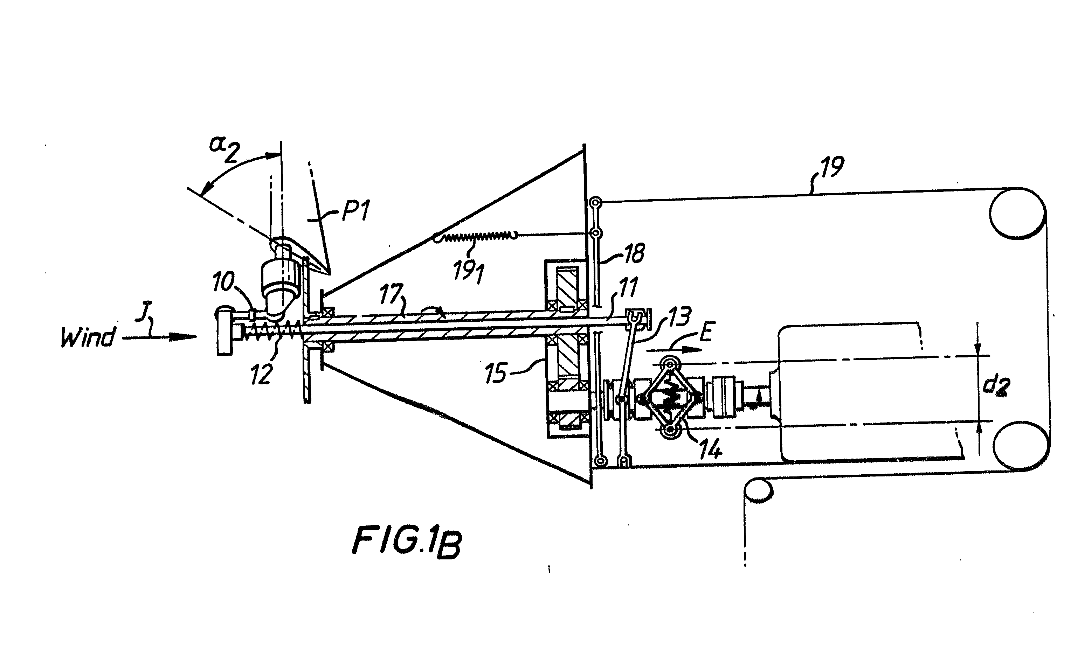

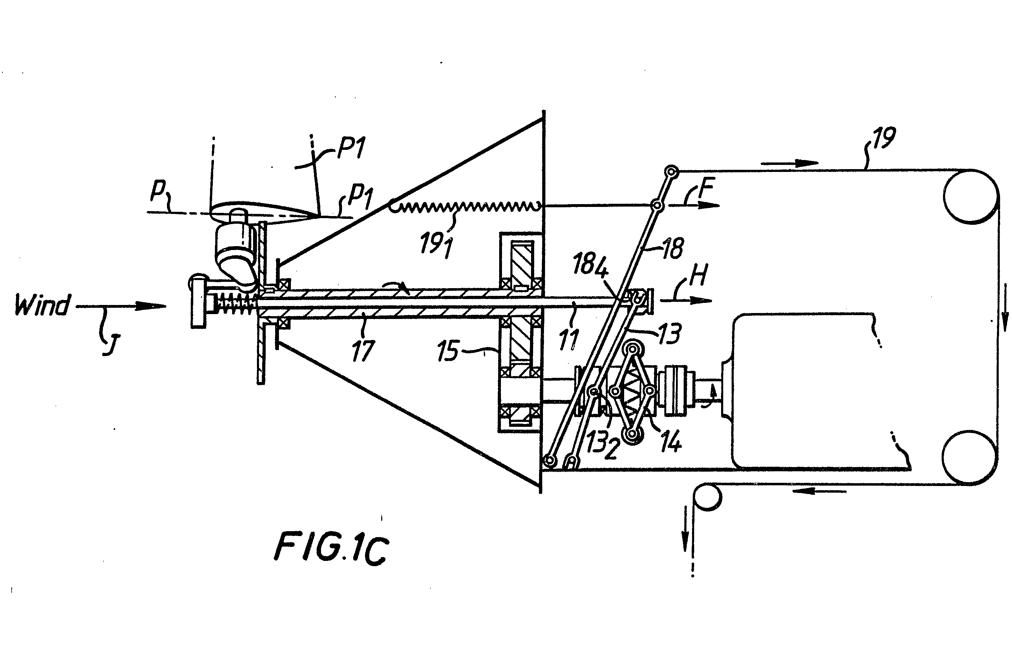

Referring now to the figures of the
drawing. In Figures 1A, 1B, 1C a windmill of the
kind set forth has a single propeller blade P1 (of
a rotor of three blades) connected by a toggle
means 10 directly to a pitch change shaft 11 that
is spring urged by a helical compression spring 12
in the direction of arrow A and able to be moved in
the direction of arrow B by a lever 13 pivoted at $13_1$
that is directly controlled at pivot $13_2$ by a
flyweight governor 14 having two weights $14_1$, $14_2$ and
a spring bias $14_3$. The governor 14 is rotated at a
speed (N) in excess of the rotor speed ($\underline{n}$) by means
of the gears G1, G2 in gear box 15. Gear G2 being
keyed at 16 to rotor hub shaft 17. The rotor rotates

- 5 -

in a plane shown by line R1, R2 and the governor weights $14_1$, $14_2$ rotate in a plane W1, W2 substantially parallel to R1, R2. An override lever 18 pivoted at $18_1$ and spring urged at $18_2$ by spring $19_1$ in the direction of arrow C is able to be pulled at position $18_3$ in the direction of arrow D.

Consider the conditions as shown in Figure 1A to be that of a normal running of the rotor with propeller blade P1 at pitch angle $\alpha_1$.

In Figure 1B the rotor speed has increased over that obtaining in Figure 1A and the governor weights $13_1$, $13_2$ have extended themselves from the diameter $\underline{d}1$ they enjoyed in Figure 1A to the diameter $\underline{d}_2$ drawing lever 13 and pitch change shaft 11 in the direction of arrow E and changing the pitch of propeller blade P1 from pitch angle $\alpha_1$ to pitch angle $\alpha_2$. The override lever 18 is now moved in the direction of arrow F (Figure 1C) and this forces lever 13 at $13_2$ via $18_4$ in the direction of arrow H drawing with it pitch change shaft 11 and thereby changing the pitch of propeller blade P1 to the feathered condition as shown by line $\underline{pp}1$ substantially parallel to the wind direction arrow J. The override lever 18 may be actuated most conveniently remote from the windmill such as from a manual line 19 that is, when the windmill is on a tower structure, operated from a simple winch not shown at the base of the tower (not shown).

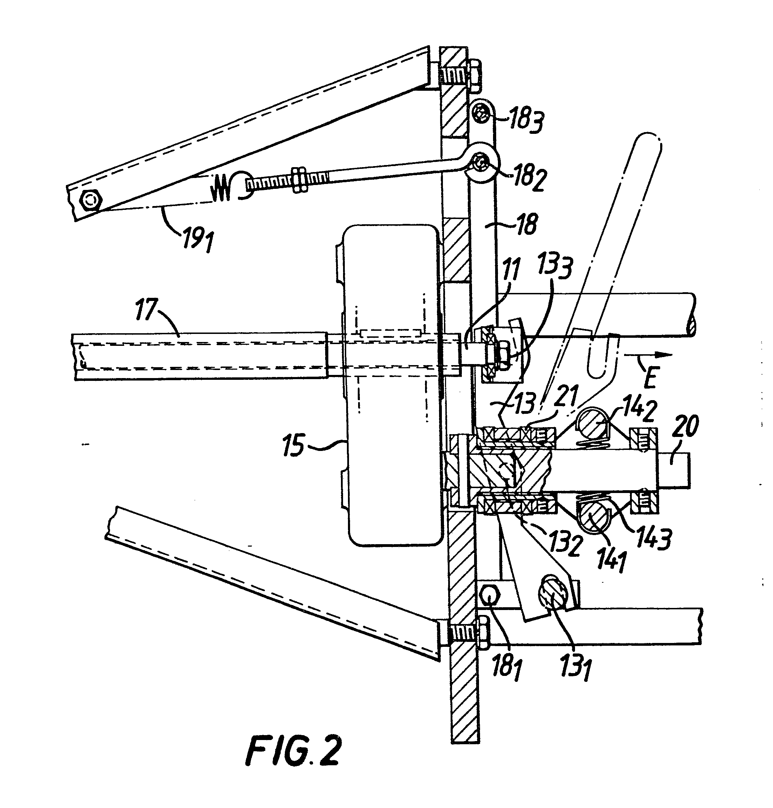

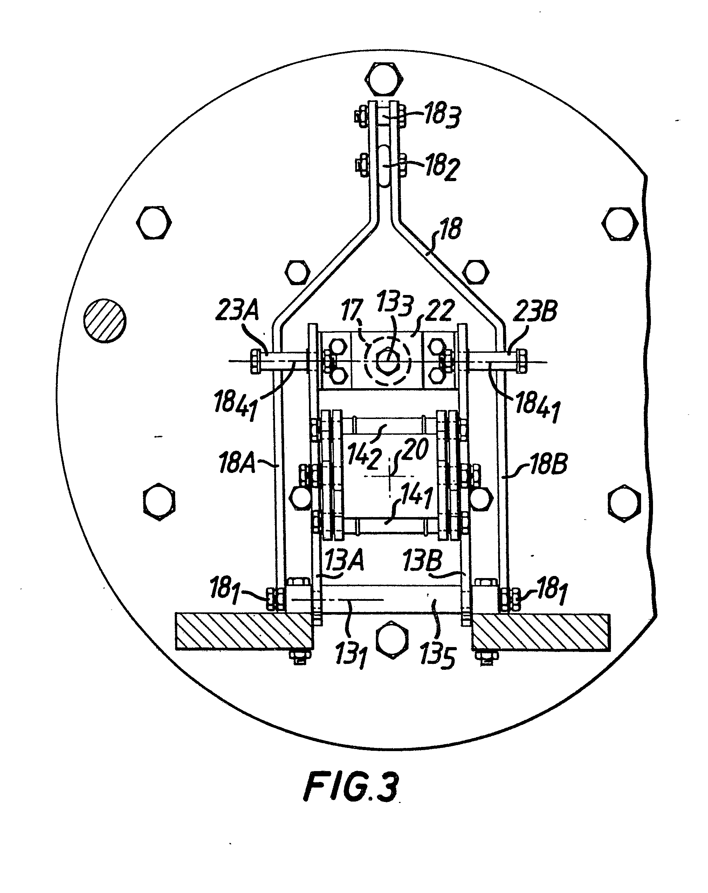

Referring now to Figures 2 and 3 rotor hub shaft 17 may have for example a speed of 400 r.p.m. and via gear box 15 steps up the speed of governor shaft 20 to 1500 r.p.m. Governor weights $14_1$, $14_2$ co-operates with sleeves to actuate lever 13 at $13_2$ about pivot point $13_1$. Lever 13 co-operates with pitch change shaft 11 at $13_3$. It can be seen in Figure 3 that lever 13 is in effect a double arm lever/of the third order having arms 13A, 13B acting about a spindle $13_5$ which is centred on position $13_1$.

Clearly as the weights $14_1$, $14_2$ move outwardly under centrifugal force so via sleeves 21 the lever 13 is actuated at $13_2$ about pivots $13_1$ to draw pitch change shaft 11 in the direction of arrow E via bracket 22. Now bracket 22 carries extension bars 23A, 23B on centre line $18_{4_1}$ (schematically shown in Figures 1A, 1B, 1C at $18_4$). When now override lever 18 is moved about its pivot 18$_1$ its two part structure 18A, 18B contacts extensions 23A, 23B and draws them and shaft 11 in the direction of arrow E to override governor 14.

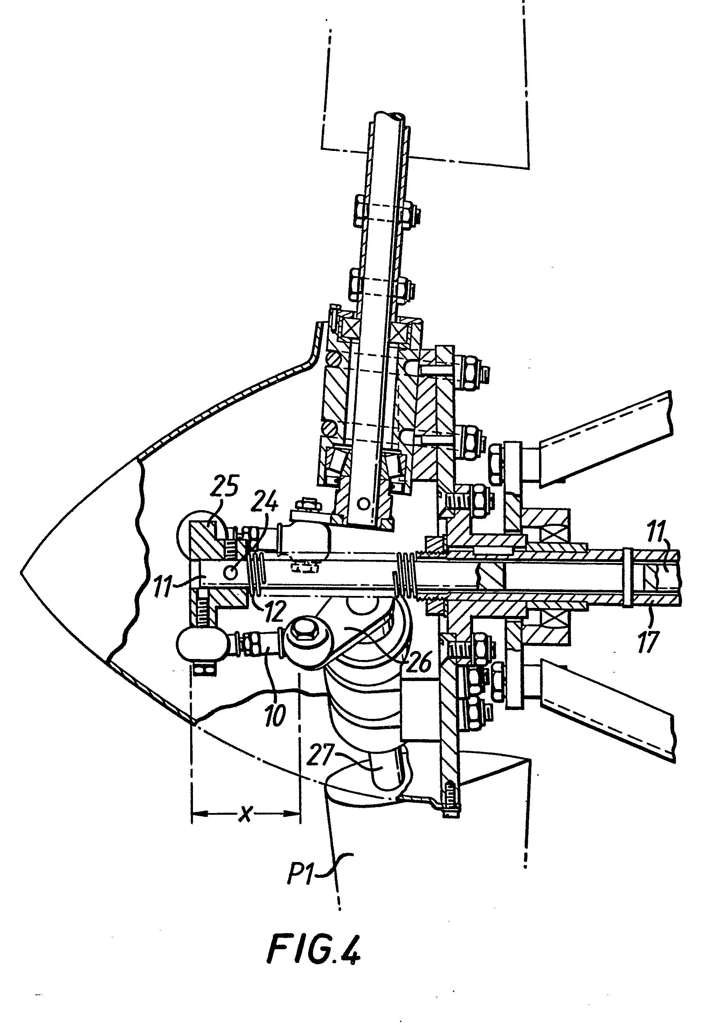

In Figure 4 there is shown the pitch change mechanism at the root of one blade. Pitch change shaft 11 is connected by pin 24 to sleeve 25 which via toggle 10 (Figure 1A) and spring 12 co-operates with cam arm 26 on blade root bar 27 of blade P1. A movement over a distance $\underline{x}$ gives a change of pitch on the blade of substantially right angle.

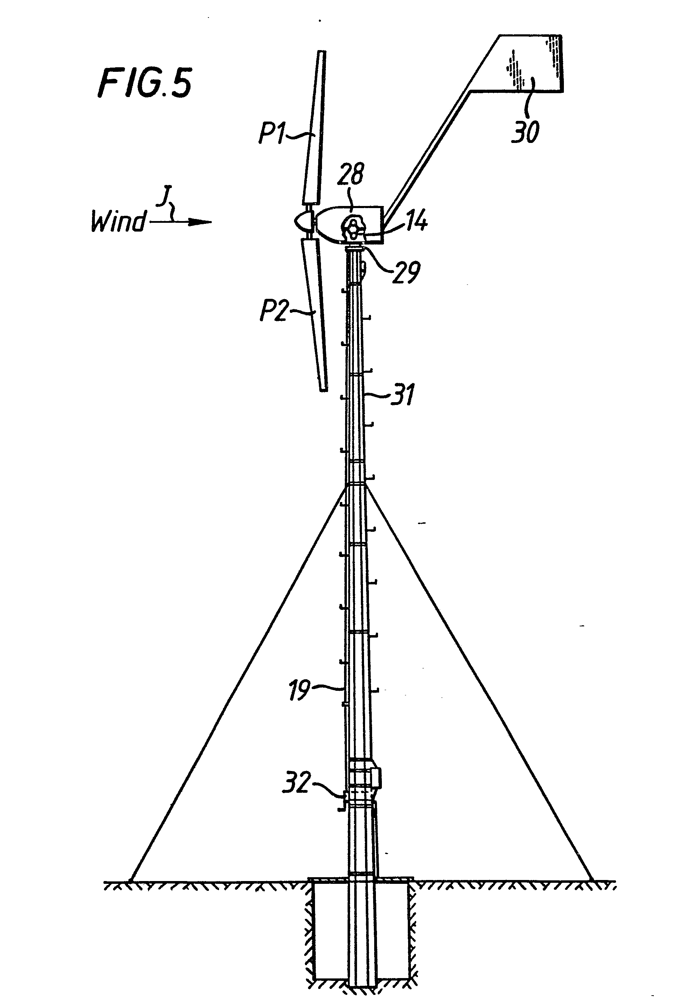

In Figure 5 a support structure 28 houses the governor 14 and two of the rotors three blades are shown at P1, P2. The structure 28 can yaw about sleeving bearing 29 and is kept into the wind by vane 30. A mast super structure 31 has a winch 32 for the actuation of line 19 to override the governor 14 and feather the blades P1, P2, P3 of the rotor if necessary to park it in the wind.

An important operational advantage from the winch 32 lies in the fact that, suitably geared, with the rotor in the wind, feathered and parked, it is easy to move from the feathered condition of coarse pitch, which is ideal for the rotor to commence rotation in the wind and then, in a synchronous manner, to come to the fixed finer pitch condition for maximum efficiency at full speed, which condition is difficult for the slow running at the start.

Also the lever 13, which dictates the limit of the fixed pitch, may be set by the winch, or by other means to intermediate settings but, however inappropriately set, will be overriden by the governor and overspeeding prevented. Thus, by operating on the pitch limit, the lever 13 dictates whether the rotor will stop or may start and by governor action dictates whether the setting so chosen is safe. In this way the autonomy of the rotor is preserved.

It is to be made clear that the lever 13 may be operated by manual or automatic servomotor means, and kept in such a position by control means that the power coefficient ($c_p$), or some other parameter it may be desired to optimize, may be correlated to the tip speed ratio, or some other reference, so that the said parameter may be optimized.

- 9 -

It can be shown that if what is known as the centrifugal pitching moment is left unbalanced on a rotor blade used in a variable pitch mode, then parasitic stresses on certain bearings are introduced and the governor forces required to coarsen pitch settings are unnecessarily high.

The centrifugal moment appears in two forms, one from the aerodynamic properties of the profile used which clearly cam be minimised by the use of a suitable blade profile and the other from an uncompensated blade which results in a tendency for the blade to seek a zero angle of attack (fine pitch) that may defeat the efforts of a centrifugal governor to reduce an excessive speed.

- 10 -

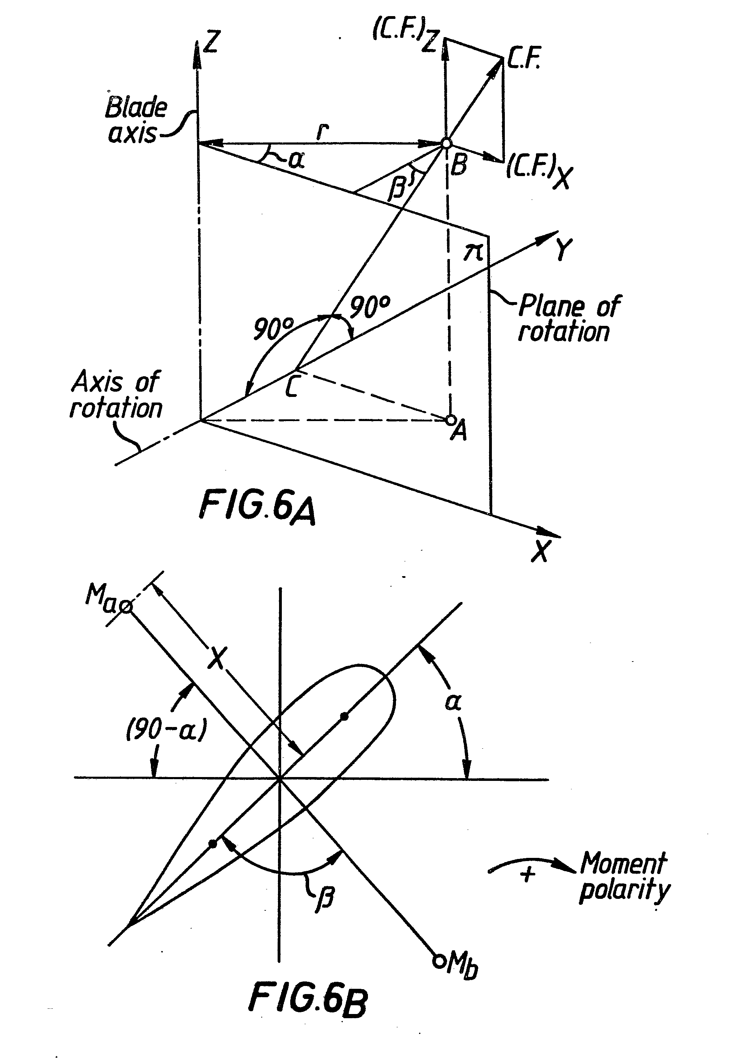

The centrifugal turning moment is readily calculable by an aerodynamicist, let a particle of mass $m_b$ be at a distance $r$ from the pitch axis of a rotor blade (Figure 6A).

now the moment $\quad m_z = CF_x \, r \sin \alpha \quad$ — 1

also $\quad \tan \alpha = \dfrac{CA}{AB}$

$$= \dfrac{r \cos \alpha}{AB}$$

$$= \dfrac{CF_x}{CF_z} \qquad\qquad\qquad — 2$$

hence $\quad \dfrac{CF_x}{CF_z} = \dfrac{r \cos \alpha}{AB}$

Now the centrifugal force $\quad CF = \dfrac{m_b (AB)}{\cos \beta} \omega^2 \quad$ — 3

Thus $\quad CF_z = m_b (AB) \omega^2$

or $\quad AB = \dfrac{CF_z}{m_b \omega^2} \qquad\qquad\qquad — 4$

Now in a blade the centrifugal turning moment $CT_M$ becomes a centrifugal pitching moment $M_D$ where

$$M_D \text{ is } CF_z \, r \sin \alpha \left( \frac{r \cos \alpha}{AB} \right) \quad \text{---} 5$$

substituting 4 in 5

$$M_D = mr^2 \sin \alpha \cos \alpha \, \omega^2 \quad \text{---} 6$$

where m is the mass of both points of a two mass dynamically equivalent system.

Now $M_D = \Uparrow \big| \, mr^2 \sin \alpha \cos \alpha \, \omega^2$

and $M_R$ the resisting moment is

$$M_R = \Downarrow \big| \, m_x \, x^2 \sin(\beta - \alpha) \cos(\beta - \alpha) \, \omega^2$$

where -

$M$ is the total blade mass (kg)

$r$ is the radius of the two mass system

$\alpha$ is the angle of attack of the blade

$\omega$ is the angular velocity of the rotor

$m_x$ is the total compensation mass (kg)

$X$ is the mass operating radius

$\beta$ is the angle between the mass radius and the chord of the blade.

- 12 -

$$m_x = \frac{m r^2 \sin\alpha \cos\alpha}{x^2 \sin(\beta-\alpha)\cos(\beta-\alpha)} \quad —7$$

Clearly if $\beta$ is 90° then

$$\frac{\sin\alpha \cos\alpha}{\sin(\beta-\alpha)\cos(\beta-\alpha)} \quad \text{is unity}$$

and $\quad m_x$ is $\dfrac{m r^2}{x^2}$ (kg) $\quad$ —— 8

(consider now a three blade rotor of radius three metres, where

$m$ is 3.45 kg

$r$ is 0.0583 m

$\beta$ is 90°

$x$ is 0.1 m

$\alpha$ is 10°

$\omega$ is 40 radians/sec.

then from (8) above

$\quad m_x$ is 1.173 kg

and from (6) above

$\quad M_D$ is 3.2 Nm per blade.

- 13 -

It is to be appreciated that if the total
blade compensation mass ($m_x$) is divided into two,
one mass ($m_a$) above and the other mass ($m_b$) below
the chord $C_1C_2$, then bending stresses are reduced
from what is obtained with one mass only on one side
of the chord.  If so divided the mass $m_a$ and $m_b$
each become 0.587 kg at a radius $x$ of 0.1 m (Figure 6B).
The masses $m_a$ $m_b$ may be placed at an angle $\beta$ less than
or greater than a right angle and the values for $m_x$
are readily found from (7) above.

-    1    -

## CLAIMS

1.        A windmill of the kind set forth
characterised in that each blade is variable in
pitch or effective pitch through substantially a
right angle to a feathered position that brakes said
rotor, said variability being effected by weights of
a centrifugal governor, said weights being rotatable
in a plane substantially parallel to the said plane
normal to the wind, said governor acting directly
on a pitch change shaft directly mechanically
connected to each blade or a part of said blade said
pitch change shaft being co-axial with said hub.

2.        The windmill according to claim 1
characterised in that the governor is provided with
an override lever that acts on the pitch change
shaft.

3.        The windmill according to claim 2
characterised in that the lever is a lever of the
third order.

4.      The windmill according to claim 2 or claim 3 characterised in that the lever is actuable by means remote from the windmill.

5.      The windmill according to claim 4 characterised in that the said means is a manual line operable by a winch.

6.      The windmill according to any preceding claim wherein a blade has means at least along part of the span to change its effective pitch.

7.      The windmill according to claim 6 characterised in that said means is a variable flap.

8.      The windmill according to any preceding claim characterised in that a blade is provided at a distance along its span with a balance weight having a weight ($m_x$) at a radius ($X$) above the blade chord at an angle ($\beta$) according to the equation

$$m_x = \frac{m r^2 \sin\alpha \cos\alpha}{X^2 \sin(\beta-\alpha)\cos(\beta-\alpha)}$$

- 3 -

where:-

$M_x$   is the total compensation mass

$M$   is the total blade mass

$r$   is the radius of a two mass equivalent system.

$\alpha$   is the angle of attack

$X$   is the operating radius of the mass

$\beta$   is the angle between the mass radius $X$ and the blade chord.

FIG.1A

$\alpha_2$

P1

19

$19_1$

18

10

17

11

Wind J

13

E

12

15

14

d2

FIG.1B

FIG.1C

Wind

P1
P1
P1

19
19₁
18
184
H
F
11
13
14
132
15
17

3/8

FIG.2

FIG.3

*FIG.4*

0021810

FIG.5

Wind J →

P1

28

30

14

29

P2

31

19

32

0021810

FIG.6A

FIG.6B

0021810

European Patent
Office

**EUROPEAN SEARCH REPORT**

Application number

EP 80 30 2092

## DOCUMENTS CONSIDERED TO BE RELEVANT

| Category | Citation of document with indication, where appropriate, of relevant passages | Relevant to claim |
|---|---|---|
| | FR - A - 1 117 788 (SOC. D'ETUDES DES PROCEDES CHEVREAU & DEVILLE)  * Page 1, right-hand column, line 25 - page 2, right-hand column, line 10; page 3, lines 3-38 * | 1,2,4, 5,8 |
| | -- | |
| | DE - B - 1 036 780 (PINTSCH-ELECTRO)  * Column 3, lines 14-50 * | 1,2,4, 5 |
| | -- | |
| | FR - A - 944 151 (BOUCHET)  * Claims * | 6,7 |
| | ---- | |

**CLASSIFICATION OF THE APPLICATION (Int. Cl. 3)**

F 03 D 7/02

**TECHNICAL FIELDS SEARCHED (Int.Cl.3)**

F 03 D

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 18-09-1980 | DE WINTER |

EPO Form 1503.1 08.78